# EUROPEAN PATENT APPLICATION

(11) **EP 4 549 068 A1**
(43) Date of publication of application: **07.05.2025**
(21) Application number: 24207718.8
(22) Date of filing: 21.10.2024
(51) Int. Cl.: B23D 31/00

(54) **METHOD OF SEPARATING METAL MATERIAL**

(30) Priority: 24.10.2023 JP 2023182353
(71) Applicant: DAIHEN Corporation, Yodogawa-ku Osaka-shi, Osaka 532-8512 (JP)
(72) Inventor: UEYAMA, Tomoyuki, Osaka-shi, Osaka, 532-8512 (JP)
(74) Representative: Hoffmann Eitle

(57) **Abstract**

A method of separating a metal material includes: pulling a metal material (10) in a first direction; and while pulling the metal material (10) in the first direction, heating a heating-target region (21) of the metal material (10) to form a heated/melted portion (20) along a second direction intersecting the first direction by sequentially heating the metal material (10) from a position close to a first end portion (11) of the metal material (10) to a position close to a second end portion (12) located opposite to the first end portion (11) in the second direction. By forming the heated/melted portion (20) with the metal material (10) being pulled in the first direction, a crack (C) produced from the heating-target region (21) is progressed to separate the metal material (10).

## Description

### CROSS REFERENCE TO RELATED APPLICATIONS

This nonprovisional application is based on Japanese Patent Application No. 2023-182353 filed on October 24, 2023 with the Japan Patent Office, the entire contents of which are hereby incorporated by reference.

### BACKGROUND OF THE INVENTION

### Field of the Invention

The present invention relates to a method of separating a metal material.

### Description of the Background Art

Japanese Patent Laying-Open No. 2002-346746 is a prior art document that discloses a method of disassembling a metal material. In the method of disassembling a metal material as described in Japanese Patent Laying-Open No. 2002-346746, a welding material that is likely to cause weld cracking is used to perform welding onto a surface of the metal material at a disassembling position at which the metal material is to be disassembled. In this way, a crack resulting from the weld cracking is produced in a direction parallel to the welding line. Force is applied to the tip of the crack to fracture the metal material, thereby disassembling the metal material.

Japanese Patent Laying-Open No. 7-323382 is a prior art document that discloses a cleaving method. In the cleaving method described in Japanese Patent Laying-Open No. 7-323382, a crack formed at a processing start point of a material is induced to be progressed in a predetermined direction by thermal stress resulting from application of laser beam, thereby cleaving the material. The laser beam is applied to a surface of the target material to induce the progress of the crack in a state in which a whole of the material is cooled with cooling means being disposed on the rear surface side of the material.

Japanese Patent Laying-Open No. 2005-305542 is a prior art document that discloses a method of manufacturing a recycled welded joint and a method of disassembling the recycled welded joint. In each of the method of manufacturing a recycled welded joint and the method of disassembling the recycled welded joint as described in Japanese Patent Laying-Open No. 2005-305542, a dissimilar-metal-welded joint having an intermetallic compound layer that can convert ductility and brittleness is provided between metal-welded joints. A joining surface of this joint is heated to produce a brittle intermetallic compound layer, thereby disassembling the joint.

### SUMMARY OF THE INVENTION

In consideration of recyclability and the like, in a method of separating a metal material, it has been required to suppress production of waste (such as dross, which is a metal oxide in the form of powder) such as a cutting chips produced when separating the metal material. However, in the method of separating a metal material as described in each of Japanese Patent Laying-Open No. 2002-346746 and Japanese Patent Laying-Open No. 2005-305542, the brittle material to promote the separation of the metal material is selected, thus resulting in high material cost or limitation in material selection. Further, in the method of separating a metal material as described in Japanese Patent Laying-Open No. 7-323382, an auxiliary material such as a coolant for cooling the metal material is required and the thickness of the metal material is limited for the sake of the cooling of the metal material. Thus, it is difficult to separate a metal material while suppressing production of waste by a simple configuration.

The present invention has been made to solve the above-described problem, and has an object to provide a method of separating a metal material so as to separate the metal material while suppressing production of waste by a simple configuration.

A method of separating a metal material according to the present invention includes: pulling a metal material in a first direction; and while pulling the metal material in the first direction, heating a heating-target region of the metal material to form a heated/melted portion along a second direction intersecting the first direction by sequentially heating the metal material from a position close to a first end portion of the metal material to a position close to a second end portion located opposite to the first end portion in the second direction. By forming the heated/melted portion with the metal material being pulled in the first direction, a crack produced from the heating-target region is progressed to separate the metal material.

In this case, the crack can be produced in the metal material due to solidification cracking when the metal material is solidified in the heating-target region, and the crack can be progressed to separate the metal material. As a result, the metal material can be separated while suppressing production of waste by such a simple configuration as compared with a case where an auxiliary material such as a welding material, a coolant gas, or an insert material is used.

In one embodiment of the present invention, the heated/melted portion when formed has a teardrop shape that is tapered on a rear side in a direction from the position close to the first end portion toward the position close to the second end portion.

In this case, the tapered portion of the teardrop shape is along the second direction, and an interface of coexistence of a solid phase and a liquid phase can be preferentially disposed at the tapered portion of the teardrop shape. Thus, since the interface of coexistence can be disposed to intersect the first direction in which the metal material is pulled, solidification cracking can be likely to be caused. As a result, since the crack due to the solidification cracking can be likely to be produced in the heating-target region of the metal material, the crack can be produced in the metal material by smaller tensile stress than that in a method of separating a metal material in a case where the heated/melted portion has an elliptical shape.

In one embodiment of the present invention, the pulling of the metal material is started prior to the heating of the metal material.

In this case, the crack can be securely produced in the heating-target region.

In one embodiment of the present invention, in the heating of the heating-target region of the metal material, the heated/melted portion is not formed at each of the first end portion and the second end portion of the metal material.

Thus, the melted metal material can be suppressed from falling in a molten state due to an impact at the time of separating the metal material.

In one embodiment of the present invention, in the heating of the heating-target region of the metal material, the heated/melted portion is formed entirely in a thickness direction of the metal material, the thickness direction intersecting each of the first direction and the second direction.

In this case, the interface of coexistence of the solid phase and the liquid phase in which the crack is to be produced in the metal material can be secured to have a wide range in the thickness direction. As a result, the crack can be produced in the heating-target region of the metal material by small tensile stress.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a separation apparatus for a metal material according to one embodiment of the present invention.
Fig. 2 is a flowchart showing a method of separating a metal material according to the embodiment of the present invention.
Fig. 3 is a plan view showing a state in which a metal material according to the embodiment of the present invention is heated while being pulled.
Fig. 4 is a cross sectional view showing the state of the metal material of Fig. 3 as viewed in a direction of arrow of a line IV-IV.
Fig. 5 is a perspective view showing a state immediately before end of heating of the metal material.
Fig. 6 is a schematic diagram showing general solidification cracking.
Fig. 7 is a plan view showing an arrangement of a crystal grain boundary formed when the metal material according to the embodiment of the present invention is heated and solidified.
Fig. 8 is a plan view showing an arrangement of a crystal grain boundary formed when a metal material according to a modification is heated and solidified.
Fig. 9 is a plan view showing a state in which the metal material according to the modification is heated while being pulled.
Fig. 10 is a plan view showing an example of the present invention.
Fig. 11 is a graph for comparison among respective amounts of discharge of waste for methods of separating a metal material.

### DESCRIPTION OF THE PREFERRED EMBODIMENTS

Hereinafter, a method of separating a metal material according to one embodiment of the present invention will be described with reference to figures. In the following description of the embodiment, the same or corresponding portions in the figures are denoted by the same reference characters and will not be described repeatedly.

It should be noted that in the figures, an X direction serving as a first direction is defined as a direction in which a metal material is pulled, a Y direction serving as a second direction is defined as a direction in which the metal material is heated, and a Z direction is defined as a thickness direction of the metal material in a heating-target region of the metal material.

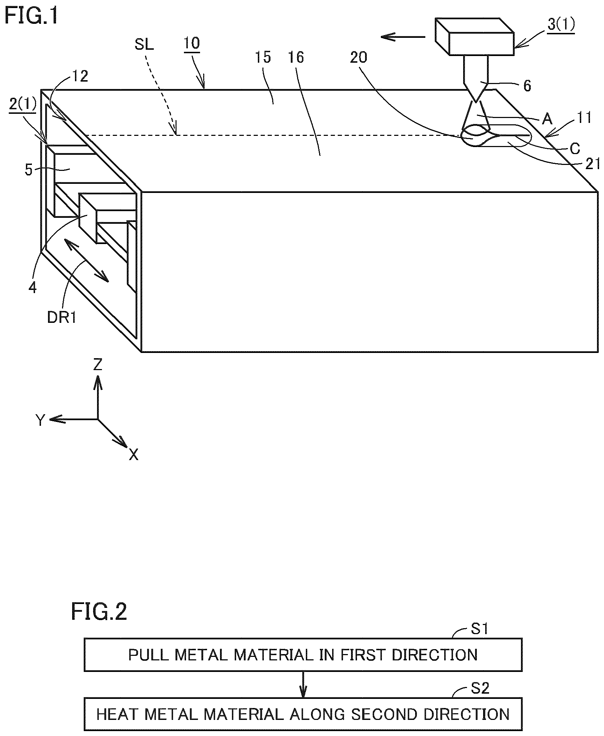

First, a configuration of a separation apparatus for a metal material according to the embodiment of the present invention will be described. Fig. 1 is a perspective view showing a configuration of the separation apparatus for a metal material according to the embodiment of the present invention. As shown in Fig. 1, a separation apparatus 1 according to the embodiment of the present invention includes a pulling unit 2 and a heating unit 3.

Metal material 10 to be separated by separation apparatus 1 has a rectangular tubular shape having an axis direction in the Y direction. It should be noted that metal material 10 is not limited to having the rectangular tubular shape and may have a plate shape.

Metal material 10 according to the present embodiment is mainly used as a structural material. Metal material 10 is, for example, a steel material. It should be noted that metal material 10 is not limited to the steel material and may be a metal material such as stainless steel, copper, or aluminum, or an alloy including any of these as a main component.

Metal material 10 has a first end portion 11 and a second end portion 12. First end portion 11 is one end portion in the Y direction. Second end portion 12 is the other end portion in the Y direction. Metal material 10 is segmented into a first portion 15 and a second portion 16 on both sides with respect to a below-described heating-target region 21 in the X direction.

Pulling unit 2 is provided to pull metal material 10. Pulling unit 2 in the present embodiment is disposed inside the rectangular tubular shape of metal material 10.

Pulling unit 2 includes a jack 4 and a pressing mechanism 5. Jack 4 is, for example, an electric jack. Pressing mechanism 5 presses the metal material in response to driving of jack 4. In the present embodiment, in response to the driving of jack 4, pressing mechanism 5 is driven from inside toward outside (DR1 directions in Fig. 1) of metal material 10 in the X direction. Thus, metal material 10 is pressed from the inside toward the outside. Stress acts on metal material 10 at heating-target region 21 so as to pull metal material 10 from both sides in the X direction.

It should be noted that pulling unit 2 is configured to pull metal material 10 from both sides, but it is not limited thereto. When the metal material is a plate-shaped member, pulling unit 2 may be configured to pull it from one side such that one end of the plate-shaped member is fixed and the plate-shaped member is pulled from only the other end. Further, pulling unit 2 is not limited to being driven by the electric jack, and may be driven by a hydraulic jack, a compressor, or the like.

Heating unit 3 heats metal material 10. Heating unit 3 is provided to be movable along an expected-separation line SL along which metal material 10 is to be separated into first portion 15 and second portion 16.

Heating unit 3 includes an electrode 6. Electrode 6 and metal material 10 are electrically connected to a power supply device (not shown). By supplying current from the power supply device, an arc A is produced from electrode 6. When arc A is applied to an outer surface of metal material 10, a portion of metal material 10 is heated and melted. In metal material 10, a below-described heated/melted portion 20 is formed.

Heating unit 3 according to the embodiment of the present invention heats metal material 10 by a plasma arc. However, heating unit 3 is not limited to being configured to heat metal material 10 by a plasma arc. Heating unit 3 may be configured to heat metal material 10 by high-frequency induction heating, laser application, gas welding, or the like. It should be noted that when the heating unit is configured to perform gas welding, it is desirable to use an oxyacetylene flame at the time of welding.

Next, a method of separating a metal material according to the embodiment of the present invention will be described. Fig. 2 is a flowchart showing the method of separating a metal material according to the embodiment of the present invention.

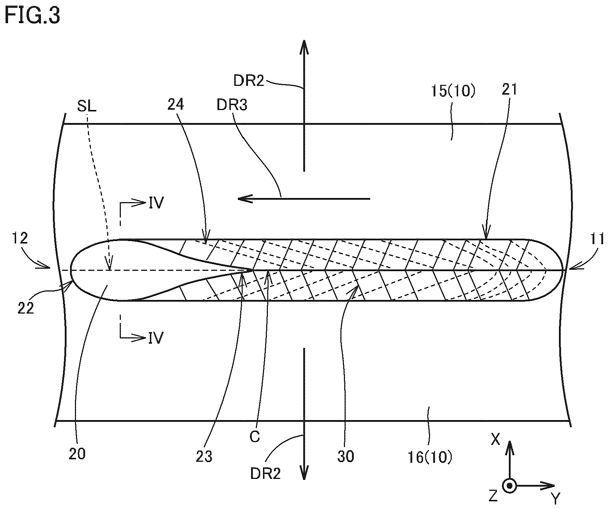

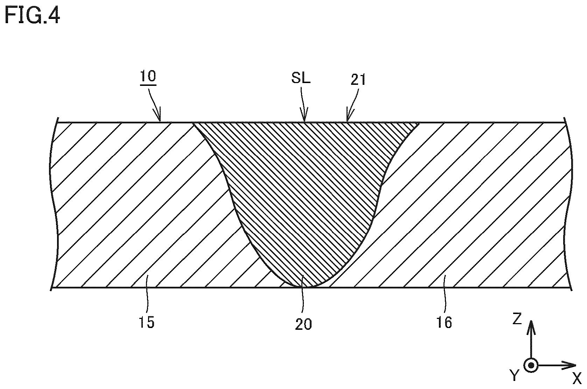

Fig. 3 is a plan view showing a state in which the metal material according to the embodiment of the present invention is heated while being pulled. Fig. 4 is a cross sectional view showing the state of the metal material of Fig. 3 as viewed in a direction of arrow of a line IV-IV.

As shown in Figs. 2 to 4, in the method of separating a metal material according to the embodiment of the present invention, first, metal material 10 is pulled in the first direction (X direction) (step S1). In the present embodiment, metal material 10 is pulled by the pulling unit from the both sides (DR2 directions in Fig. 3) in the X direction.

Next, while pulling metal material 10 in the first direction (X direction), heating-target region 21 of metal material 10 is heated along the second direction (Y direction) intersecting the first direction (X direction) (step S2). Specifically, while pulling metal material 10 in the first direction (X direction), metal material 10 is heated sequentially (DR3 direction in Fig. 3) from a position close to first end portion 11 of metal material 10 to a position close to second end portion 12 located opposite to first end portion 11 in the second direction (Y direction). Thus, heating-target region 21 of metal material 10 is heated to form heated/melted portion 20 along the second direction (Y direction).

In the present embodiment, the pulling of metal material 10 is started prior to the heating of metal material 10. It should be noted that the pulling of metal material 10 may be started simultaneously with the below-described heating of metal material 10.

When the heating unit is moved, heated/melted portion 20 is moved, with the result that heating-target region 21 having been heated is solidified. When heating-target region 21 is solidified, a heating mark 24 having an uneven shape (ripple) in the form of a wavy pattern is formed in the surface of the material. In heating-target region 21, a crystal grain boundary 30 is formed in response to the solidification.

It should be noted that in the present embodiment, the direction (X direction) in which metal material 10 is pulled and the direction (Y direction) in which heating-target region 21 is formed are orthogonal to each other, but they are not limited thereto, and the direction in which metal material 10 is pulled and the direction in which heating-target region 21 is formed may intersect each other and may be inclined with respect to each other.

As shown in Fig. 4, in the heating of heating-target region 21 of metal material 10, heated/melted portion 20 is formed entirely in the thickness direction (Z direction) of metal material 10, the thickness direction intersecting each of the first direction (X direction) and the second direction (Y direction). The thickness of metal material 10 in the present embodiment is, for example, 6 mm.

It should be noted that heated/melted portion 20 may not be formed entirely in the thickness direction (Z direction) of metal material 10. Heated/melted portion 20 may be formed to have a thickness as large as, for example, 50% or more and less than 100% of the thickness of metal material 10 in the thickness direction of metal material 10.

Heated/melted portion 20 according to the present embodiment when formed has a shape of arc on a front side 22. Further, heated/melted portion 20 when formed has a teardrop shape that is tapered on a rear side 23 in a direction from the position close to first end portion 11 toward the position close to second end portion 12.

The teardrop shape of heated/melted portion 20 is produced at an intermediate or high heating rate. The heating rate is, for example, 40 cm/min or more.
Table 1 shows separation conditions for separating metal material 10 while forming heated/melted portion 20 having the teardrop shape. As shown in Table 1, the separation of the metal material is varied depending on the thickness of the material, the heating rate, a heating current, an arc voltage, and a tensile load. When separation apparatus 1 is driven at least under each of separation conditions 1 to 3 shown in Table 1, metal material 10 can be separated with heated/melted portion 20 having the teardrop shape.

**[Table 1]**

| Separation Condition | Plate Thickness [mm] | Heating Rate [cm/min] | Heating Current [A] | Arc Voltage [V] | Load [kN] |
|---|---|---|---|---|---|
| 1 | 1 | 40 | 150 | 10 | 15 |
| 2 | 2 | 40 | 230 | 12 | 20 |
| 3 | 3 | 40 | 280 | 12 | 25 |

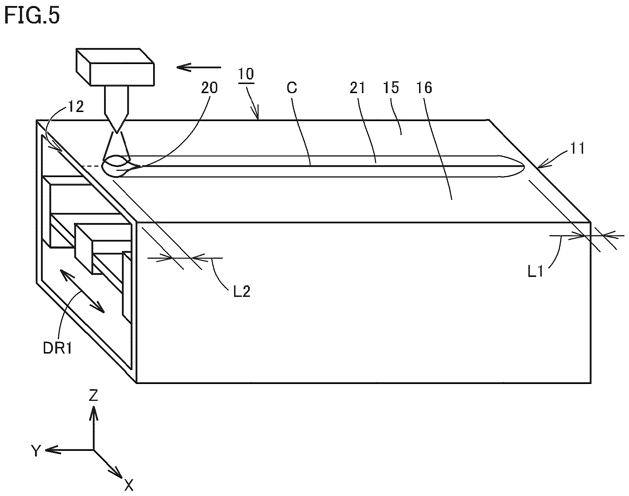

Fig. 5 is a perspective view showing a state immediately before end of heating of the metal material. As shown in Fig. 5, metal material 10 is heated to form heated/melted portion 20 to the position close to second end portion 12 while a crack C is progressed along the second direction (Y direction).

In the heating of heating-target region 21 of metal material 10, heated/melted portion 20 is not formed at each of first end portion 11 and second end portion 12 of metal material 10. Therefore, heated/melted portion 20 of metal material 10 can be suppressed from falling in a molten state from the outer surface of metal material 10 due to an impact at the time of separating metal material 10.

Since heated/melted portion 20 is not formed at each of first end portion 11 and second end portion 12 of metal material 10, heating-target region 21 extends in the second direction (Y direction) so as not to reach each of first end portion 11 and second end portion 12. In the X direction, heating-target region 21 is formed at a distance L1 from first end portion 11. Further, in the X direction, heating-target region 21 is formed at a distance L2 from second end portion 12. Each of distances L1, L2 is, for example, 1 mm or more and 5 mm or less.

Heated/melted portion 20 is formed with metal material 10 being pulled in the first direction (X direction). Thus, crack C produced from heating-target region 21 is progressed to separate metal material 10. Crack C is progressed along expected-separation line SL. Metal material 10 is separated into first portion 15 and second portion 16.

Next, a mechanism of the method of separating a metal material according to the present embodiment will be described. The method of separating a metal material according to the present embodiment utilizes solidification cracking that occurs when the metal material is heated and a portion of the metal material is solidified. The solidification cracking is one type of high-temperature cracking.

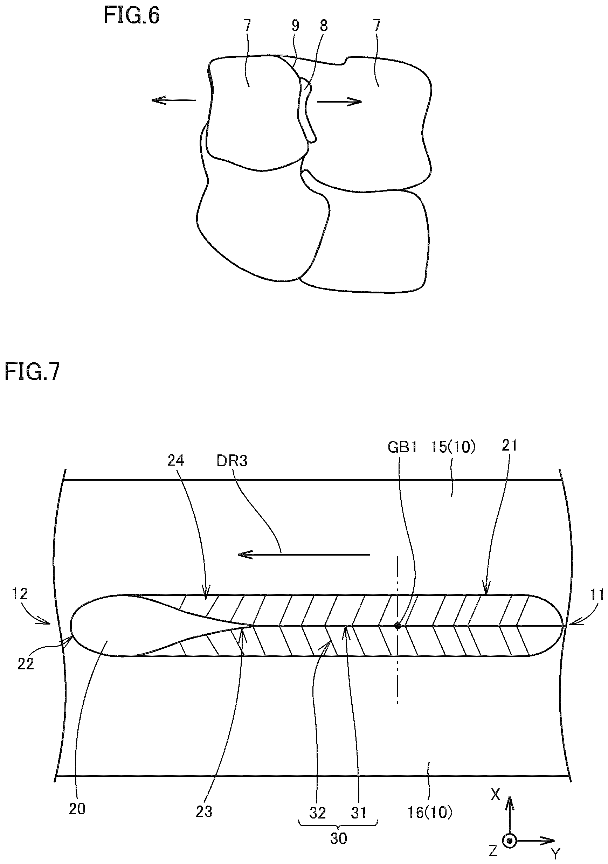

Fig. 6 is a schematic diagram showing general solidification cracking. As shown in Fig. 6, the solidification cracking occurs in such a manner that strain in the pulling direction due to solidification shrinkage of the metal material acts on a portion thereof at which a liquid film (molten metal that has not been solidified yet) remains during the solidification of the metal material.

Specifically, as the mechanism of the occurrence of solidification cracking, crystal grains 7 are formed when the melted metal material is solidified. A low-melting-point compound 8 such as sulfur or phosphorus is segregated in a liquid state at a crystal grain boundary 9. When stress is applied to low-melting-point compound 8 due to thermal strain (stress is applied in directions of arrows in Fig. 6), crystal grains 7 are decoupled from each other, thereby producing a crack from the liquid portion. Thus, when tensile stress is applied along a direction perpendicular to crystal grain boundary 9, the solidification cracking occurs at an interface of coexistence of the solid phase and the liquid phase at crystal grain boundary 9.

Fig. 7 is a plan view showing an arrangement of the crystal grain boundary formed when the metal material according to the embodiment of the present invention is heated and solidified. It should be noted that Fig. 7 shows a case where no tensile stress in the X direction is applied to metal material 10.

As shown in Fig. 7, crystal grain boundary 30 is formed in metal material 10 in response to the solidification after the heating. In the present embodiment, a first crystal grain boundary 31 and a second crystal grain boundary 32 are formed.

First crystal grain boundary 31 is formed along the second direction (Y direction). Second crystal grain boundary 32 is formed to be inclined with respect to second end portion 12 from the center of heating-target region 21 toward the both sides in the X direction. Since heated/melted portion 20 has the teardrop shape, rear side 23 of heated/melted portion 20 is solidified substantially at the center of heating-target region 21 in the X direction, thereby forming first crystal grain boundary 31.

As described above, the solidification cracking occurs when tensile stress along the direction orthogonal to the interface of coexistence of the solid phase and the liquid phase is applied to the interface of coexistence of the solid phase and the liquid phase at the crystal grain boundary. In the present embodiment, the crystal grains grow toward the central portion of heating-target region 21 in the X direction as in the manner of crystal grain growth at an intermediate or high heating rate. One large first crystal grain boundary 31 is formed along the Y direction. In this case, stress concentration occurs on first crystal grain boundary 31 to apply tensile stress in the X direction to the interface of coexistence of the solid phase and the liquid phase along first crystal grain boundary 31, thereby promoting the solidification cracking. Thus, as shown in Fig. 3, crack C is produced at the position at which first crystal grain boundary 31 is produced.

Here, a method of separating a metal material according to a modification of the present invention will be described with reference to figures. In the method of separating a metal material according to the present modification, since a heating condition for the metal material is different from that in the method of separating a metal material according to the embodiment of the present invention, the same configurations as those of the method of separating a metal material according to the embodiment of the present invention will not be described repeatedly.

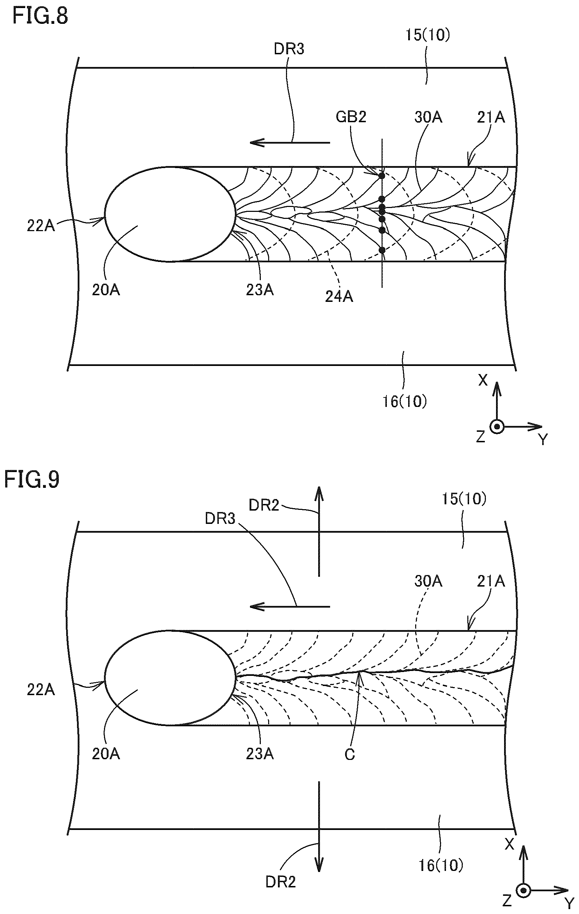

Fig. 8 is a plan view showing an arrangement of a crystal grain boundary formed when the metal material according to the modification is heated and solidified.

As shown in Fig. 8, in the method of separating a metal material according to the modification, heated/melted portion 20A has an elliptical shape. Heated/melted portion 20A has such an elliptical shape when heated at a relatively low rate. The heating rate is, for example, less than 40 cm/min. Further, a processing mark 24A has a shape protruding toward first end portion 11.

In this case, crystal grain boundaries 30A are continuously formed so as to be connected to rear side 23A of heated/melted portion 20A from both ends of heating-target region 21A in the X direction. Further, in a portion of heating-target region 21A, fine crystal grains are precipitated in the vicinity of the center in the X direction.

Fig. 9 is a plan view showing a state in which the metal material according to the modification is heated while being pulled. As shown in Fig. 9, since crystal grain boundaries 30A are continuously formed so as to be connected to rear side 23A of heated/melted portion 20A from the both ends of heating-target region 21A in the X direction, crack C is formed at positions at which the crystal grain boundaries are formed to extend in the direction substantially perpendicular to the directions (DR2 directions) in which metal material 10 is pulled. Crack C continuously extends along the second direction (Y direction) in a meandering manner. Thus, metal material 10 is separated into first portion 15 and second portion 16.

In comparison between the present embodiment and the modification, metal material 10 according to the present embodiment can be separated by smaller tensile stress than that in the modification.

Specifically, as shown in Fig. 8, the number GB2 of crystal grain boundaries is six on a certain straight line in the X direction, for example. Therefore, tensile stress to cause the solidification cracking in crystal grain boundary 30A is distributed to the plurality of crystal grain boundaries.

On the other hand, as shown in Fig. 7, in the method of separating a metal material according to the present embodiment, the number GB1 of crystal grain boundaries at a certain position in the X direction is one, i.e., first crystal grain boundary 31. Thus, tensile stress is concentrated on first crystal grain boundary 31, with the result that the solidification cracking is likely to occur at the position at which first crystal grain boundary 31 is formed. Therefore, as shown in Fig. 3, crack C is produced at the position at which first crystal grain boundary 31 is formed. With the method of separating a metal material according to the present embodiment, crack C can be produced in metal material 10 with the smaller tensile stress than that in the method of separating a metal material according to the modification.

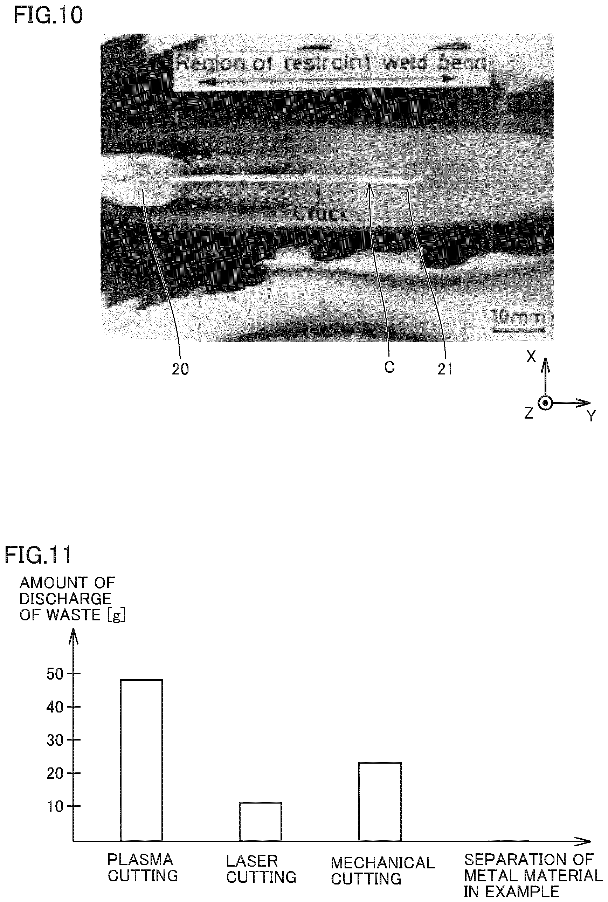

Fig. 10 is a plan view showing an example of the present invention. As shown in Fig. 10, a test was conducted in the following manner: tensile stress was applied in one direction (X direction) to a steel sheet having a thickness of 2 mm and melt run with a TIG arc was performed in a direction (Y direction) orthogonal to the one direction so as to separate the steel sheet by solidification cracking. It was confirmed that crack C was progressed along heating-target region 21 with heated/melted portion 20 being formed in the Y direction.

Fig. 11 is a graph for comparison among respective amounts of discharge of waste for methods of separating a metal material. In Fig. 11, the comparison was made among amounts of discharge of waste (dross or cutting chips) each produced when a steel sheet having a thickness of 3 mm was separated by a separation length of 100 cm.

As shown in Fig. 11, in a case where plasma cutting, laser cutting, or mechanical cutting was performed without applying tensile stress to the metal material, waste was produced in each of the cases. Since the metal material is separated by removing a portion of the target material for the cutting in each of the cutting methods, cutting chips each in the form of a fine powder are produced in the case of a band saw or water jet, or a metal oxide (dross) in the form of a powder is produced in the case of a gas or plasma melt-cutting because the molten metal is removed by jetting highpressure oxygen or air. Since it is difficult to recycle each of these, they are treated as industrial waste.

On the other hand, in the method of separating a metal material according to the example of the present invention, since the metal material is separated by the crack produced at the crystal grain boundary, no dross or cutting chip was produced unlike in the melt-cutting or the mechanical cutting.

In the method of separating a metal material according to the embodiment of the present invention, metal material 10 is pulled in the first direction (X direction), and heating-target region 21 of metal material 10 is heated to form heated/melted portion 20 along the second direction (Y direction) intersecting the first direction while pulling metal material 10. Thus, crack C resulting from the solidification cracking can be produced at the interface of coexistence of the solid phase and the liquid phase in metal material 10 at the time of the solidification of heating-target region 21. As a result, metal material 10 can be separated while suppressing the production of waste by the simple configuration as compared with a case where the metal material is separated by using an auxiliary material such as a welding material, a coolant gas, or an insert material or by using a specific material.

In the method of separating a metal material according to the embodiment of the present invention, since heated/melted portion 20 has the teardrop shape that is tapered on rear side 23 in the direction (DR3 direction) from the position close to first end portion 11 toward the position close to second end portion 12, the tapered portion of the teardrop shape is along the second direction (Y direction) and the interface of coexistence of the solid phase and the liquid phase can be preferentially disposed at the tapered portion of the teardrop shape, with the result that the interface of coexistence can be arranged to intersect the first direction in which the metal material is pulled. As a result, crack C is promoted to be produced in heating-target region 21 of metal material 10 by the solidification cracking when tensile stress along the direction orthogonal to the interface of coexistence is applied to the interface of coexistence, with the result that crack C can be produced in metal material 10 by smaller tensile stress than that in the method of separating the metal material in the case where heated/melted portion 20 has an elliptical shape.

In the method of separating a metal material according to the embodiment of the present invention, crack C can be securely produced in heating-target region 21 by starting the pulling of metal material 10 prior to the heating of metal material 10.

In the method of separating a metal material according to the embodiment of the present invention, since heated/melted portion 20 is not formed at each of first end portion 11 and second end portion 12 of metal material 10 in the heating of heating-target region 21 of metal material 10, metal material 10 melted can be suppressed from falling in a molten state due to an impact at the time of separating metal material 10.

In the method of separating a metal material according to the embodiment of the present invention, since heated/melted portion 20 is formed entirely in the thickness direction (Z direction) of metal material 10 in the heating of heating-target region 21 of metal material 10, the interface of coexistence of the solid phase and the liquid phase in which crack C is to be produced in metal material 10 can be secured to have a large range in the thickness direction (Z direction). As a result, crack C can be produced by small tensile stress in heating-target region 21 of metal material 10.

In the method of separating a metal material according to the embodiment of the present invention, when separating metal material 10, the metal material can be separated at low cost without using an auxiliary material such as a welding material, a coolant gas, or an insert material, and can be produced without producing unnecessary waste such as a metal oxide (dross) or cutting chips each in the form of a powder at the time of separation.

The method of separating a metal material according to the embodiment of the present invention can be applied to disassembling of a structure in recycling of a welded structure or joined structure such as: a transportation device such as a vehicle; a building structure; a container; or a pipe. With the method of separating a metal material according to the embodiment of the present invention, the metal material can be separated without producing waste as compared with mechanical cutting with a band saw or the like, water jet cutting, gas melt-cutting, or plasma cutting, each of which is another separation method that can be applied to the above-described disassembling of a structure. Thus, the method of separating a metal material according to the embodiment of the present invention can contribute to pursuit of realization of a green society mainly based on a carbon-neutral and decarbonized society involving resource circulation contributing to non-use of natural resource or energy saving.

Also in the method of separating a metal material according to the modification of the embodiment of the present invention, metal material 10 is pulled in the first direction (X direction) and heating-target region 21A of metal material 10 is heated to form heated/melted portion 20A along the second direction (Y direction) intersecting the first direction while pulling metal material 10. Thus, crack C resulting from the solidification cracking can be produced in heating-target region 21A at the interface of coexistence of the solid phase and the liquid phase of metal material 10. As a result, metal material 10 can be separated while suppressing the production of waste by the simple configuration as compared with a case where the metal material is separated by using an auxiliary material such as a welding material, a coolant gas, or an insert material or by using a specific material.

### [Supplementary Note]

As described above, the present embodiment includes the following disclosure.

### [Configuration 1]

A method of separating a metal material, the method comprising:
pulling a metal material (10) in a first direction; and
while pulling the metal material (10) in the first direction, heating a heating-target region (21) of the metal material (10) to form a heated/melted portion (20) along a second direction intersecting the first direction by sequentially heating the metal material (10) from a position close to a first end portion (11) of the metal material (10) to a position close to a second end portion (12) located opposite to the first end portion (11) in the second direction, wherein
by forming the heated/melted portion (20) with the metal material (10) being pulled in the first direction, a crack produced from the heating-target region (21) is progressed to separate the metal material (10).

### [Configuration 2]

The method of separating a metal material according to configuration 1, wherein the heated/melted portion (20) when formed has a teardrop shape that is tapered on a rear side (23) in a direction from the position close to the first end portion (11) toward the position close to the second end portion (12).

### [Configuration 3]

The method of separating a metal material according to configuration 1 or 2, wherein the pulling of the metal material (10) is started prior to the heating of the metal material (10).

### [Configuration 4]

The method of separating a metal material according to any one of configurations 1 to 3, wherein in the heating of the heating-target region (21) of the metal material (10), the heated/melted portion (20) is not formed at each of the first end portion (11) and the second end portion (12) of the metal material (10).

### [Configuration 5]

The method of separating a metal material according to any one of configurations 1 to 4, wherein in the heating of the heating-target region (21) of the metal material (10), the heated/melted portion (20) is formed entirely in a thickness direction of the metal material (10), the thickness direction intersecting each of the first direction and the second direction.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of separating a metal material, the method comprising:
pulling a metal material (10) in a first direction; and
while pulling the metal material (10) in the first direction, heating a heating-target region (21) of the metal material (10) to form a heated/melted portion (20) along a second direction intersecting the first direction by sequentially heating the metal material (10) from a position close to a first end portion (11) of the metal material (10) to a position close to a second end portion (12) located opposite to the first end portion (11) in the second direction, wherein
by forming the heated/melted portion (20) with the metal material (10) being pulled in the first direction, a crack (C) produced from the heating-target region (21) is progressed to separate the metal material (10).

2. The method of separating a metal material according to claim 1, wherein the heated/melted portion (20) when formed has a teardrop shape that is tapered on a rear side (23) in a direction from the position close to the first end portion (11) toward the position close to the second end portion (12).

3. The method of separating a metal material according to claim 1 or 2, wherein the pulling of the metal material (10) is started prior to the heating of the metal material (10).

4. The method of separating a metal material according to any one of claims 1 to 3, wherein in the heating of the heating-target region (21) of the metal material (10), the heated/melted portion (20) is not formed at each of the first end portion (11) and the second end portion (12) of the metal material (10).

5. The method of separating a metal material according to any one of claims 1 to 4, wherein in the heating of the heating-target region (21) of the metal material (10), the heated/melted portion (20) is formed entirely in a thickness direction of the metal material (10), the thickness direction intersecting each of the first direction and the second direction.
